# EUROPEAN PATENT APPLICATION

(11) **EP 0 884 507 A1**
(43) Date of publication of application: **16.12.1998**
(21) Application number: 98109261.2
(22) Date of filing: 22.05.1998
(51) Int. Cl.: F16K 11/085

(54) **Multiple valve**

(30) Priority: 12.06.1997 SE 9702236
(71) Applicant: AB Markaryds Metallarmatur, 285 00 Markaryd (SE)
(72) Inventor: Carlsson, Leif, 341 31 Ljungby (SE)
(74) Representative: Wallengren, Yngvar

(57) **Abstract**

The disclosure relates to a multiple valve comprising a valve housing (10) with a circular inner circumferential surface and cone members (11, 12) movable in the valve housing (10) for opening and closing, respectively, flows between a plurality of connections (13, 14, 15, 16; 13', 14', 15' 16') distributed along the periphery of the valve housing (10).

A first cone member (11) is disposed pivotally in a rotational plane at right angles to the centre axis of the circumferential surface, a first aperture (17) in the first cone member (11) extending in the rotational plane, so that the first recess (17) places in communication a first pair of adjacent connections (13; 14), and a second recess (18) in the first cone member (11) extending on the opposing side of the centre axis so that the second recess (18) places in communication a second pair of adjacent connections (15, 16) with the cone member (11) in a first position, and so that the connections (13; 14) in the first pair are each connected to their respective connection (16; 15) in the second pair in a second position.

## Description

### TECHNICAL FIELD

The present invention relates to a multiple valve comprising a valve housing with a circular inner circumferential surface and cone members movable in the valve housing for opening and closing, respectively, flows between a plurality of connections distributed along the periphery of the valve housing. A particular field of use for the present invention is heat pump systems. In such systems, which are used in both heating and cooling operations, different flows of coolant must be capable of being switched in different directions in connection with alternating between heating and cooling operations.

### BACKGROUND ART

In the above-outlined heat pump systems, use has previously been made of a plurality of different valves which are interconnected so that various switchings in operation may take place simultaneously. In such instance, thoroughly matched valves are required, as well as a control system which ensures the simultaneous switching. One reason why different valves have been employed has been that there are extreme temperature differences between the flows with hot and cold media.

### OUTLINE OF THE INVENTION

One object of the present invention is to realise a multiple valve with cone construction which permits a plurality of connection possibilities between different connections. This object is attained in that the present invention has been given the characterizing features as set forth in appended Claim 1.

Other advantages and distinctive features of the present invention are apparent from the appended description, Drawings and subclaims.

### BRIEF DESCRIPTION OF THE ACCOMPANYING DRAWINGS

The present invention will now be described in greater detail hereinbelow, with the aid of a number of embodiments and with reference to the accompanying Drawings. In the accompanying Drawings:
Fig. 1 is a side elevation, partly in cross section, of a multiple valve according to one embodiment of the present invention;
Fig. 2 is a cross sectional view of the multiple valve taken along the line II-II In Fig. 1;
Fig. 3 is a cross sectional view of the multiple valve of Fig. 1, with a valve cone turned through 90°;
Fig. 4 is a side elevation of a valve cone illustrated in Fig. 1;
Fig. 5 is a side elevation, partly in cross section, of the valve cone of Fig. 4; and
Fig. 6 is a coupling diagram in which a multiple valve according to the present invention is employed.

### DESCRIPTION OF PREFERRED EMBODIMENTS

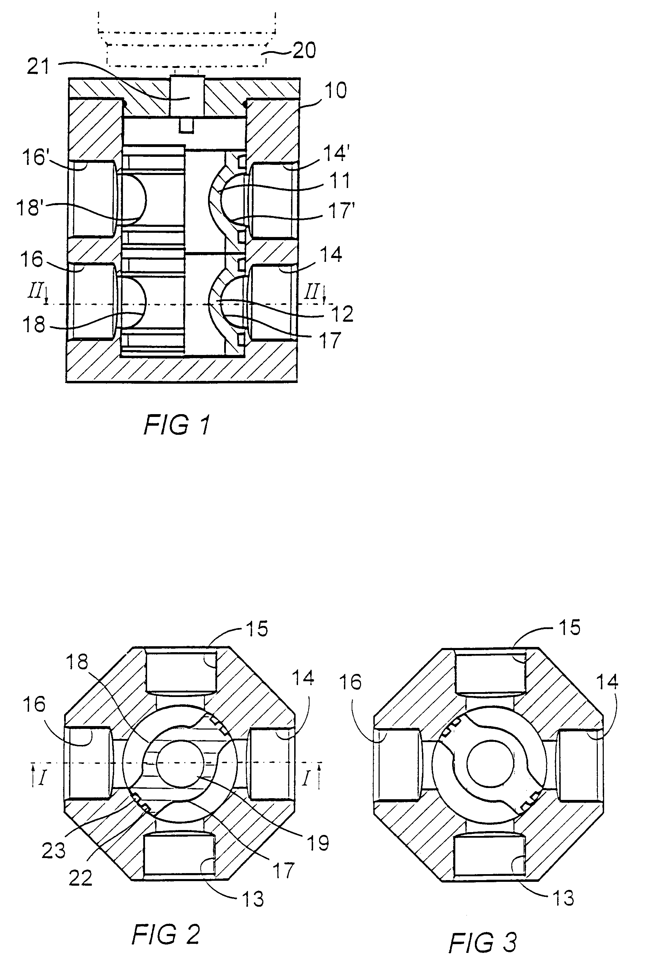

In the embodiment of the present invention illustrated in Fig. 1, double cone members 11, 12 are enclosed in a valve housing 10. The valve housing 10 is designed as a hollow body with an inner circular cross section, and the cone members 11, 12 are disposed to be pivotal in a plane at right angles to the plane of section. The outer contour of the valve housing 10 is octagonal in cross section. The cone members 11, 12 are designed as circular-cylindrical bodies with a central through-going axial recess 19 (see Fig. 2). They are also interconnected to one another axially offset along the centre line of the valve housing 10 so that pivot together within the valve housing 10. The pivotal movement of the cone members 11, 12 about the centre axis of the valve housing is realised by means of an operating device 20 which is intimated by broken lines in Fig. 1. The operating device 20 is connected to an upper cone member 11 via a spindle 21. Connections 13-16, 13'-16' in two axially discrete planes are provided in the valve housing 10 and discharge via through holes in the interior of the valve housing.

Along parallel chords, a first arched recess 17 and a second arched recess 18 are provided in the cone members 11, 12. As will be more clearly apparent from Fig. 2, each respective arched recess 17, 18 places in communication two adjacent ports to the connections. In the position illustrated in Fig. 2, the connection 13 is in communication with the connection 14 and the connection 15 is in communication with the connection 16. In the embodiment illustrated in Fig. 2, the ports to the connections in each respective plane lie offset 90° in relation to each other. The aperture diameter of the ports and the angular distance between the ports are selected such that the cone members 11, 12 reliably break the communication between the connections which are not communicated by the recesses 17, 18.

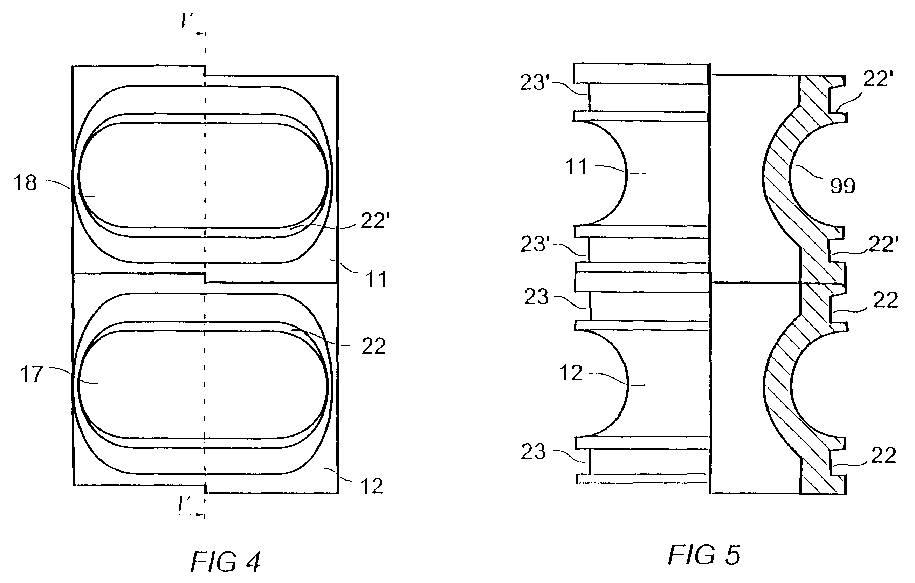

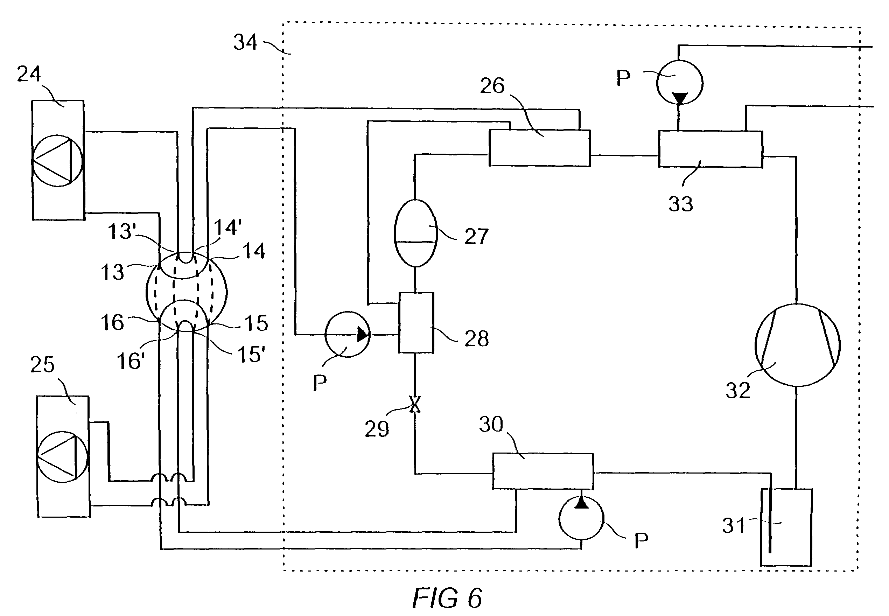

Closed grooves 22, 23 run around each respective recess 17, 18, in which grooves O-rings or similar sealing devices are disposed. The groove 22 is also shown in Figs. 4 and 5.

In the position illustrated in Fig. 3, the cone members 11, 12 have been turned through 90° so that the recesses 17, 18 instead place the connections 14 and 15; and 16 and 13, respectively in communication. The same applies to corresponding connections 14' and 15'; and 16' and 13' in the axially superjacent plane.

Fig. 4 is a side elevation of the cone members 11, 12 showing how the recesses 17 and 18 are designed. The recesses 17, 18 each extend over almost half of the circumference of the cone member and are surrounded by the grooves 22, 23, respectively. The corresponding feature is also apparent from Fig. 5 which shows the cone members 11, 12 partly in cross section. The recesses 17, 18 are rounded-off and constitute a large aperture through the cone members. The apertures connect well to the ports of the connections. As a result, the pressure drop through the multiple valve will be slight. Suitably, the cone members 11, 12 are manufactured from material possessing poor thermal conductivity, for example plastic. Each cone member may be composed of two injection moulded halves, which may further reduce their thermal conductivity.

The poor thermal conductivity in the cone members 11, 12 is a major advantage in an application according to Fig. 6. In this practical application, use is made of an embodiment of a multiple valve according to the invention for switching of coolant in a heat pump system. The heat pump system must be capable of both heating and cooling the indoor air. The switching between hot and cold operation takes place by means of the multiple valve according to the present invention which is disposed between two secondary sides of a heat pump 34. In the secondary sides, suitable coolant is employed, for example ethylene glycol (30.5 weight per cent). The working temperature of the medium varies between -10°C and +60°C, and the flow rate is about 600 l/h.

With the setting of the multiple valve as shown in Fig. 6, the system is working in hot operation. Heat is emitted to indoor convectors 24 and heat is absorbed in outdoor convectors 25. This implies that hot glycol flows through one side of the multiple valve and cold flows through the other. The flows have their counterpart in the position of the cone members as shown in Fig. 2. On switching to cold operation, the operating device 20 of the multiple valve is actuated so that the cone members 11, 12 are turned through 90°. In such instance, the flow moves to the channels through the multiple valve indicated by broken lines, and having its counterpart in the adjustment setting in Fig. 3.

The heat pump system includes a first heat exchanger 26 which, via a reservoir 27, is connected to a second heat exchanger 28. The second heat exchanger 28 is connected via a valve 29 to a third heat exchanger 30. The third heat exchanger 30 is connected via a tank 31 and a compressor 32 to a fourth heat exchanger 33. Pumps P ensure that the coolant is pumped around the system in different loops.

## Claims

1. A multiple valve comprising a valve housing (10) with a circular inner circumferential surface and cone members (11, 12) movable in the valve housing (10) for opening and closing, respectively, flows between a plurality of connections (13, 14, 15, 16; 13', 14', 15', 16') distributed along the periphery of the valve housing (10), **characterized in that** a first cone member (11) is disposed pivotally in a rotational plane at right angles to the centre axis of the circumferential surface; that a first recess (17) in the first cone member (11) extends in the rotational plane so that the first recess (17) places in communication a first pair of adjacent connections (13; 14); and that a second recess (18) in the first cone member (11) extends on the opposing side of the centre axis so that the second recess (18) places in communication a second pair of adjacent connections (15, 16) with the cone member (11) in a first position, and such that the connections (13; 14) in the first pair are each placed in communication with each respective connection (16; 15) in the second pair in a second position.

2. The multiple valve as claimed in Claim 1, **characterized in that** a second cone member (12) is disposed pivotally in a rotational plane at right angles to the centre axis of the circumferential surface; that a first recess (17') in the second cone member (12) extends in the rotational plane so that the first recess (17') places in communication a third pair of adjacent connections (13', 14'); that a second recess (18') in the second cone member (12) extends on the opposing side of the centre axis so that the second recess (18) places in communication a fourth pair of adjacent connections (15'; 16'); and that the first cone member (11) and the second cone member (12) are disposed axially offset from one another in the valve housing (10).

3. The multiple valve as claimed in Claim 2, **characterized in that** the first cone member (11) is connected to the second cone member (12) for mutual pivoting around the centre axis.

4. The multiple valve as claimed in Claim 1, **characterized in that** a groove (22, 23) is provided in the cone members (11, 12) around the recesses (17, 18) for accommodating a sealing element.

5. The multiple valve as claimed in Claim 4, **characterized in that** the groove (22, 23) runs in a closed loop between two parallel peripherally running parts and two arcuate parts interconnecting same.

6. The multiple valve as claimed in Claim 1, **characterized in that** the recess (17, 18) is designed to be rounded-off with a radius which corresponds to the radius of one connection (13, 14, 15, 16) and the aperture communicating the interior of the valve housing (10).

7. The multiple valve as claimed in Claim 1, **characterized in that** each respective pair of adjacent connections (13; 14, 15; 16) discharges in two ports in the circumferential surface of the valve housing (10) offset 90° in relation to one another.
